# EUROPEAN PATENT SPECIFICATION

(11) **EP 2 750 949 B1**
(45) Date of publication and mention of the grant of the patent: **11.09.2019**
(21) Application number: 12712350.3
(22) Date of filing: 26.03.2012
(51) Int. Cl.: B60T 13/26, B60T 8/17

(54) **VEHICLE BRAKING SYSTEM**
FAHRZEUGBREMSSYSTEM
SYSTÈME DE FREINAGE DE VÉHICULE

(30) Priority: 22.06.2011 GB 201110568
(43) Date of publication of application: 09.07.2014
(73) Proprietor: Haldex Brake Products AB, 261 24 Landskrona (SE)
(72) Inventor: HARRISON, Dudley, John, Solihull West Midlands B90 4YP (GB)
(74) Representative: Johnson, Emma Elizabeth
(86) International application number: PCT/GB2012/050659
(87) International publication number: WO 2012/175927

(56) References cited:
- EP-A2- 2 058 193
- WO-A1-2011/003491
- DE-U1- 20 122 779

## Description

The present invention relates to a braking system according to the preamble of claim 1, particularly, but not exclusively to a braking system for a trailer of a road vehicle comprising a tractor and trailer combination. A braking system of this kind is known from WO 2011/003491 A.

Large commercial trailers are typically fitted with two types of brake actuator - a service actuator in which air pressure on a piston or diaphragm pushes a rod which applies mechanical turning force to the input shaft of the brake, and a service/spring actuator which includes, in addition to a service actuator, a spring actuator comprising an internal coil spring which acts on the pushrod, which can be compressed when a second chamber is pressurised. The brakes can be applied therefore by either increasing pressure supplied to the service actuator as normal, and/or by a reducing the pressure supplied to the spring actuator. A common configuration, for example, is a semi-trailer with three axles, the front of which has service actuators and the middle and rear of which has service/spring actuators. Other combinations are possible, however.

In the normal driving condition the spring actuators are pressurised from the compressed air supply line (or trailer reservoir) to hold them off. Graduated braking in response to driving demand for braking is effected via the service actuators.

If the compressed air supply (or trailer reservoir) pressure falls, the pressure to the service actuators falls with it, reducing the applied force to the brake. At the same time, however, the pressure in the spring actuators is reducing by the same amount, which results in substantially the same braking force being maintained until and including when the supply line or reservoir is completely empty. Normally a park valve is also included in the supply line, which allows the pressure in the spring actuators to be exhausted in order to positively park the trailer.

It is also normal practice to include an emergency apply function to a trailer brake system. This acts when the pneumatic supply line ('red line') to the trailer is disconnected, exhausted or severed (thereby preventing the trailer reservoir from being replenished with compressed air). The emergency apply function acts on either the service actuators or the spring actuators, and can be required due to a fault when the vehicle is moving.

Usually a shunt valve is also included to divert air from the trailer reservoir to defeat the emergency apply function in order to allow the trailer to be moved ('shunted') without connection to a towing vehicle with a compressed air supply. This may be required, for instance, at a distribution depot or ferry terminal.

Emergency braking by the supply of pressurised fluid to the service actuators (i.e. via the service brake line) has an advantage in that this flow of fluid is normally controlled by the electronic braking system (EBS) or anti-lock braking system (ABS) of the trailer. The vehicle can either be immediately brought to a safe stop with the benefit of the anti-lock function, or the emergency brake application can be held off whilst the driver is warned of the situation. The driver may then bring the vehicle to a safe stop at the side of the road using normal service braking.

Emergency braking using the spring actuators, i.e. by the release of fluid from the spring line, can be less complex, but has disadvantages in that it is not normally possible to provide an anti-lock function without additional components which then makes the solution more complex than the service solution. One solution to this problem is presented in DE3522183C1. In the system proposed in this document an electrically operated valve is provided to control the release of pressurised fluid from the spring brake. If wheel-lock is detected, this valve may be operated as an ABS valve to stop, momentarily, release of fluid from the spring brake.

In an alternative proposal, disclosed in EP1538054, the braking system is provided with a means for preventing the emergency application of the spring brake in the event of loss of pressure in the spring brake circuit, and the service braking circuit downstream of the or each modulator associated with brake actuators on one side of the vehicle is connected to the spring brake line via a shuttle valve. The shuttle valve is configured such that pressurised fluid is supplied to the spring brake line from this portion of the service braking circuit when the fluid pressure in the spring brake line is lower than the pressure in the service brake circuit. Thus fluid from one half of the service braking circuit is used to prevent the application of the spring brake. The service braking circuit may then be used to apply the brakes to bring the vehicle to a halt. The ABS is disabled on the one side of the vehicle, however, to avoid chattering of the spring brake during an ABS intervention, but can be operated as normal on the other side of the vehicle.

A further alternative proposal, disclosed in WO2011/003491, is alleged to be an improvement over the system disclosed in EP1538054. In this proposal, if wheel lock is detected during the emergency application of the spring brakes resulting from loss of pressure in the spring brake circuit, the system acts to direct pressurised fluid from the service circuit to the spring brake circuit to release the spring brakes, whilst at the same time applying the service brakes. Once the pressure in the spring brake chambers is high enough, a "spring store neutralising valve" is operated to isolate the spring brake chambers. The EBS modulator may then use conventional ABS algorithms to modify the braking force applied by the service brakes on both sides of the vehicle without affecting the spring brake.

According to a first aspect of the invention we provide a vehicle braking system comprising a brake actuator which is operable to adopt a brake apply position in which the actuator may apply a braking force to a vehicle wheel and a brake release position in which the actuator may release any braking force applied to a vehicle wheel, the brake actuator having a spring brake chamber and a spring and being configured such that supply of pressurised fluid to the spring brake chamber causes the brake actuator to move against the biasing force of the spring to the brake release position and release of pressurised fluid from the spring brake chamber causes the brake actuator to move under the action of the spring to the brake apply position, the system further including a supply line whereby the spring brake chamber is, in use, connected to a supply of pressurised fluid, and an emergency brake apply valve which has a control port which is connected to the supply line, the emergency brake apply valve being configured automatically to connect the spring brake chamber to a low pressure region when the pressure at the control port falls below a predetermined level, wherein the system further includes an electrically operable emergency braking override valve which has a first port which is connected to the supply line and a second port which is connected to the control port of the emergency brake apply valve and which, when supplied with sufficient electrical power, acts to prevent loss of fluid pressure at the control port of the emergency brake apply valve.

In one embodiment of the invention the emergency brake apply valve has an input port which is connected to the supply line and a second port which is connected to the spring brake chamber, and is movable between a first position in which the input port is connected to the output port and a second position in which the input port is closed and the output port vents to a low pressure region. In this case, mechanical biasing means may be provided to urge the emergency brake apply valve into the second position, and movement of the emergency brake apply valve from the second position to the first position is achieved by the supply of pressurised fluid to the control input at sufficient pressure to overcome the force of the biasing means.

The brake actuator may further include a service brake chamber, wherein supply of pressurised fluid to the service brake chamber causes the brake actuator to move to the brake apply position. In this case, the system may further include a control line which in use connects a source of a fluid pressure braking demand signal to the service brake chamber via a braking control valve assembly. The brake valve assembly may comprise at least one modulator which has a control port which is connected to the control line for receipt of a fluid pressure braking demand signal, a supply port which is connected to a source of pressurised fluid, a delivery port which is connected to the service brake chamber, and an exhaust port which vents to a low pressure region, the modulator being operable to move between a build configuration in which the supply port is connected to the delivery port whilst the exhaust port is closed, a hold configuration in which the exhaust port and the supply ports are closed and an exhaust configuration in which the delivery port is connected to the exhaust port whilst the supply port is closed.

In one embodiment of the invention, the vehicle braking system further comprises a pressurised fluid reservoir which is connected to the control line via a brake apply valve. In this case, the brake apply valve may be movable between a first configuration in which the brake apply valve substantially prevents flow of fluid from the pressurised fluid reservoir to the control line, and a second in which the brake apply valve allows flow of fluid from the pressurised fluid reservoir to the control line.

A non-return valve may be provided in the supply line upstream of the input port of the emergency brake apply valve, the non-return valve permitting flow of fluid along the supply line to the emergency brake apply valve whilst substantially preventing flow of fluid in the opposite direction. In this case, the pressurised fluid reservoir may be connected to the supply line downstream of the non-return valve.

A second non-return valve may be provided in the supply line upstream of the input port of the emergency brake apply valve, the second non-return valve also permitting flow of fluid along the supply line to the emergency brake apply valve whilst substantially preventing flow of fluid in the opposite direction. In this case, the pressurised fluid reservoir may be connected to the supply line between the two non-return valves.

In one embodiment of the invention, the emergency braking override valve has a third port which is connected to the supply line between the first port of the emergency brake apply valve and the connection to the control port of the emergency brake apply valve. In this case, the third port may be connected to the supply line downstream of the non-return valve. Where two non-return valves are provided, the third port is preferably connected to the supply line between the two non-return valves.

The emergency braking override valve may be movable between a first position in which its first port is connected to its second port, whilst its third port is closed, and a second position in which its third port is connected to its second port whilst its first port is closed.

The emergency braking override valve may be provided with mechanical biasing means to urge the emergency braking override valve into the first position, movement of the emergency braking override valve from the first position to the second position being achieved by the supply of electrical power to the emergency braking override valve.

In another embodiment of the invention the emergency braking override valve is movable between a first position in which its first port is connected to its second port, and a second position in which flow of fluid between its second port and its first port is substantially prevented. In this case, the emergency braking override valve is preferably provided with mechanical biasing means to urge the emergency braking override valve into its first position, and movement of the emergency braking override valve from the first position to the second position being achieved by the supply of an electrical current to the emergency braking override valve.

Embodiments of the invention will now be described, by way of example only, with reference to the following figures, of which,
FIGURE 1 shows a schematic illustration of a first embodiment of braking system according to the invention in normal service braking mode,
FIGURE 2 shows a schematic illustration of the first embodiment of braking system according to the invention in autonomous or forced braking mode,
FIGURE 3 shows a schematic illustration of the first embodiment of braking system according to the invention in normal parking mode,
FIGURE 4 shows a schematic illustration of the first embodiment of braking system according to the invention when the supply line is disconnected from the source of pressurised fluid,
FIGURE 5 shows a schematic illustration of the first embodiment of braking system according to the invention in emergency braking override mode,
FIGURE 6 shows a schematic illustration of a second embodiment of braking system according to the invention in normal braking mode, and
FIGURE 7 shows a schematic illustration of the second embodiment of braking system in emergency braking override mode.

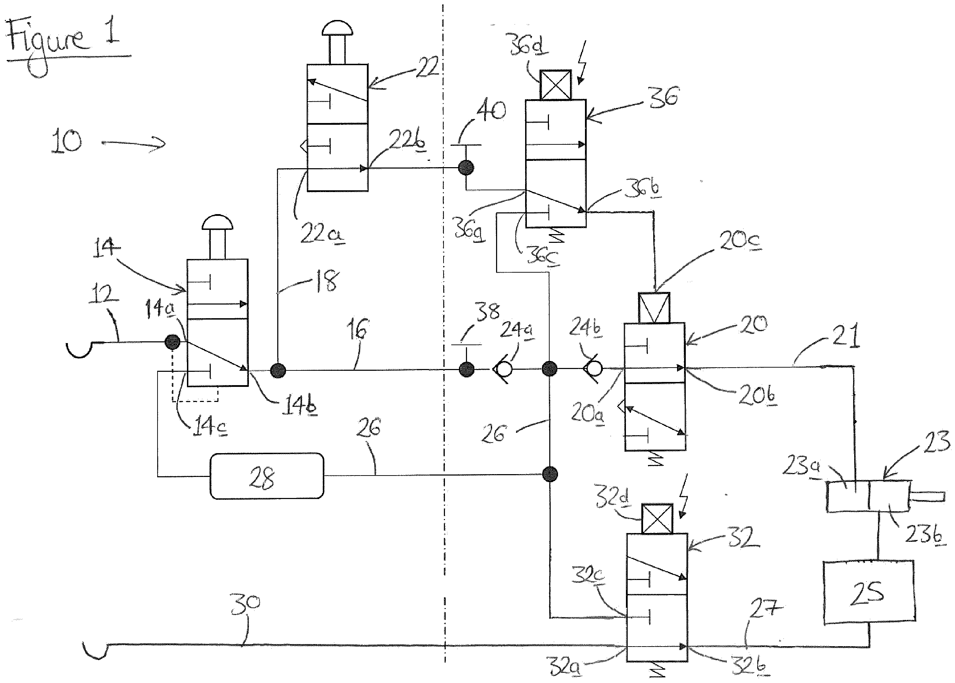

Referring now to Figure 1 there is shown a braking system 10 for a trailer of a vehicle comprising a tractor and a trailer or semi-trailer. The braking system comprises a supply line 12 which is adapted to be connected to a source of pressurised fluid, typically compressed air, on a tractor to which the trailer is coupled. The supply line 12 extends first input 14a of a shunt valve 14, the output 14b of the shunt valve 14 being connected to a junction between an emergency apply line 16 and a park line 18. The emergency apply line 16 extends to an input 20a of an emergency apply valve 20, whilst the park line 16 extends to an input 22a of a park valve 22. The output 20b of the emergency apply valve 20 is connected to the spring brake chamber 23a of a service / spring actuator 23 via a spring brake line 21. The emergency apply valve 20 is also provided with a control input 20c which is connected to an output 22b of the park valve 22.

Two one-way check valves 24a, 24b are provided in the emergency apply line 16, both being oriented to allow flow of fluid from the shunt valve 14 to the emergency apply valve 20 but to prevent flow of fluid in the other direction along the emergency apply line 16, i.e. away from the emergency apply valve 20.

A trailer reservoir supply line 26 extends from the emergency apply line 16 between the two check valves 24a, 24b to a pressurised fluid reservoir 28 mounted on the trailer. An outlet from the trailer reservoir 28 is connected to a second input 14c of the shunt valve 14.

There is also provided a control line 30 which is adapted to be coupled to a braking control line on a tractor to which the trailer is coupled, the braking control line carrying a fluid pressure braking demand signal generated when a driver of the vehicle operates a brake pedal or the like to indicate a need for braking. The control line 30 is connected to a first input 32a of a brake apply valve 32, an output 32b of the brake apply valve 32 being connected to control input of a conventional electrical braking system (EBS) control valve assembly 25 via a service brake line 27. The EBS control valve assembly 25 typically comprises at least a modulator and is connected to the service brake chamber 23b of a brake actuator 23. The modulator has a control port which is connected to the control line for receipt of a fluid pressure braking demand signal, a supply port which is connected to a source of pressurised fluid, a delivery port which is connected to the service brake chamber, and an exhaust port which vents to a low pressure region, and is operable to move between a build configuration in which the supply port is connected to the delivery port whilst the exhaust port is closed, a hold configuration in which the exhaust port and the supply ports are closed and an exhaust configuration in which the delivery port is connected to the exhaust port whilst the supply port is closed. Various configurations of modulator are well known to those skilled in the art. The EBS control valve assembly 25 is operable to provide anti-lock braking control.

A second input 32c of the brake apply valve 32 is connected to the trailer reservoir supply line 26.

The system is also provided with an emergency braking override valve36 which has a first port 36a which is connected to the output 22b of the park valve 22, a second port 36b which is connected to the control input 20c of the emergency apply valve 20, and a third port 36c which is connected to the emergency apply line 16 between the first and second one-way check valves 24a, 24b.

The shunt valve 14 is movable between a first position (illustrated in Figure 1) in which the first input 14a is connected to the output 14b whilst the second input 14c is closed, and a second position in which the first input 14a is closed and the second input 14c is connected to the output 14b. In this example, the shunt valve 14 is adapted to be moved manually between the first and second positions.

The emergency apply valve 20 is movable between a first position (illustrated in Figure 1) in which the first input 20a is connected to the output 20b and a second position in which the first input 20a is closed and the output 20b vents to a low pressure region (typically to atmosphere). Mechanical biasing means (in this example a spring) is provided to urge the emergency apply valve 20 into the second position. Movement of the emergency apply valve 20 from the second position to the first position is achieved by the supply of pressurised fluid to the control input 20c at sufficient pressure to overcome the force of the biasing means.

The park valve 22 is movable between a first position (illustrated in Figure 1) in which the input 22a is connected to the output 22b and a second position in which the input 22a is closed and the output 22b vents to a low pressure region (typically to atmosphere). In this example, the park valve 22 is adapted to be moved manually between the first and second positions.

The brake apply valve 32 is movable between a first position (illustrated in Figure 1) in which the first input 32a is connected to the output 32b, whilst the second input 32c is closed, and a second position in which the first input 32a is closed and the third input 32c is connected to the output 32b. The brake apply valve 32 is electrically operable, in this example, by means of a solenoid. Mechanical biasing means (in this example a spring) is provided to urge the brake apply valve 32 into the first position. Movement of the brake apply valve 32 from the first position to the second position is achieved by the supply of an electrical current to the solenoid 32d.

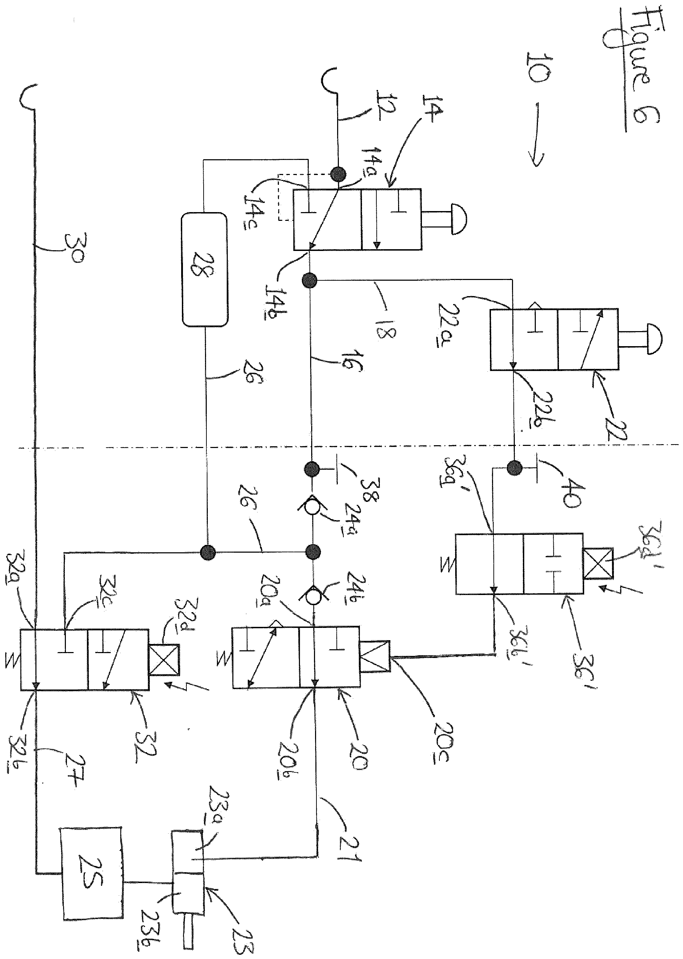

The emergency braking override valve 36 is movable between a first position (illustrated in Figures 1 to 5) in which its first port 36a is connected to its second port 36b, whilst its third port 36c is closed, and a second position (illustrated in Figure 6) in which its third port 36c is connected to its second port 36b whilst its first port 36a is closed. The passage of fluid from the supply line 16 to the control input 20c of the emergency apply valve 20 via the park valve 22 is therefore not affected by the emergency braking override valve36 when the emergency braking override valve 36 is in its first portion. The emergency braking override valve 36 is electrically operable, in this example, by means of a solenoid 36d. Mechanical biasing means (in this example a spring) is provided to urge the emergency braking override valve 36 into the first position. Movement of the emergency braking override valve 36 from the first position to the second position is achieved by the supply of an electrical current to the solenoid 36d.

The braking system is operated as follows.

When the trailer is coupled to a tractor, and there is normal service braking, the braking system is configured as shown in Figure 1. The shunt valve 14 and park valve 22 are set to their first positions, and there is no supply of electrical current to the brake apply valve 32. The supply line 12 is connected to a source of pressurised fluid on the tractor, and pressurised fluid passes to the control input 20c of the emergency apply valve 20 via the park line 18 and the park valve 22. The presence of pressurised fluid at its control input 20a causes the emergency apply valve 20 to move to its first position whereby the first input 20a is connected to the output 20b. As a result, pressurised fluid passes along the emergency apply line 16 via the shunt valve 14, and then to the spring brake chamber 32a of the brake actuator 32b via the emergency apply valve 20 and spring brake line 21. The fluid pressure in the spring brake chamber 32a overcomes the biasing force of the spring and the actuator acts to release the brake.

Pressurised fluid also passes from the tractor to the trailer reservoir 28 via the trailer reservoir supply line 26 so that the trailer reservoir 28 is charged with pressurised fluid.

When a driver of the vehicle generates a fluid pressure braking demand signal, this passes along the braking control line 30 to the EBS valve assembly 25, resulting in the supply of fluid pressure to the service braking chamber 23b of the brake actuator 23, and the gradual application of brake pressure in line with driver demand for braking. A conventional anti-lock function may be provided by means of modulating valves in the EBS valve assembly 25.

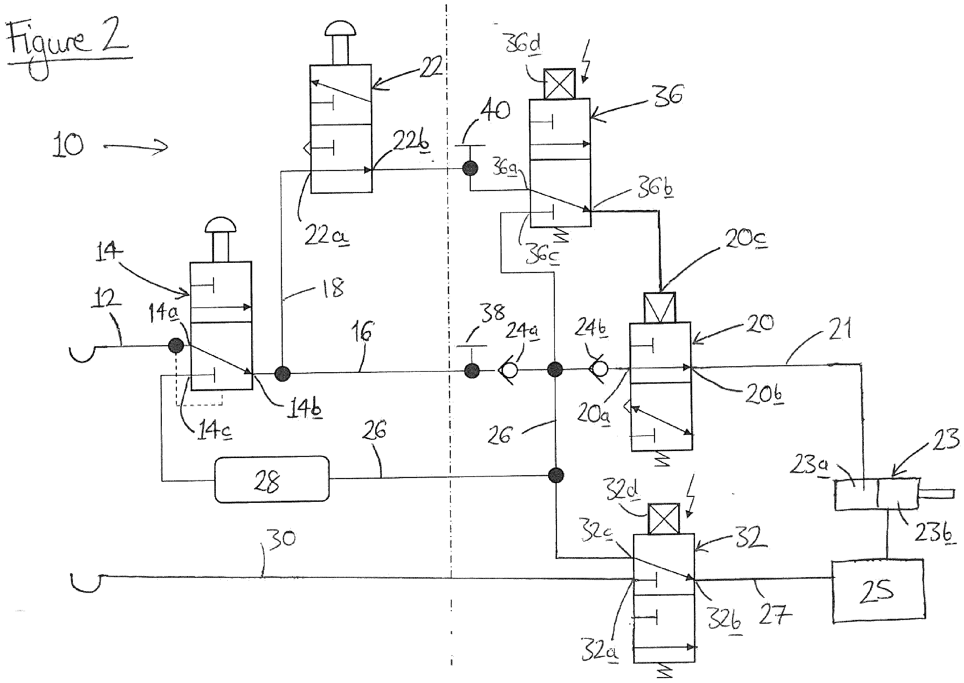

The system 10 may be operated to provide service braking even when there is no fluid pressure braking demand signal by the supply of an electrical current to the solenoid 32d of the brake apply valve 32. This causes the brake apply valve 32 to move to its second position in which the first input 32a is closed and the second input 32c is connected to the output 32b, as illustrated in Figure 2. Pressurised fluid then passes from the supply line 12 through the shunt valve 14 to the emergency apply line 16, through the first one way check valve 24a to the trailer reservoir supply line 26, then on to the EBS control valve assembly 25 via the brake apply valve 32. The service brake chamber 23b of the actuator 23 may therefore be pressurised autonomously, i.e. without driver initiated braking demand, or with a higher pressure than provided by the fluid pressure braking demand signal. Such automonous service braking may be required in an automatic stability control system.

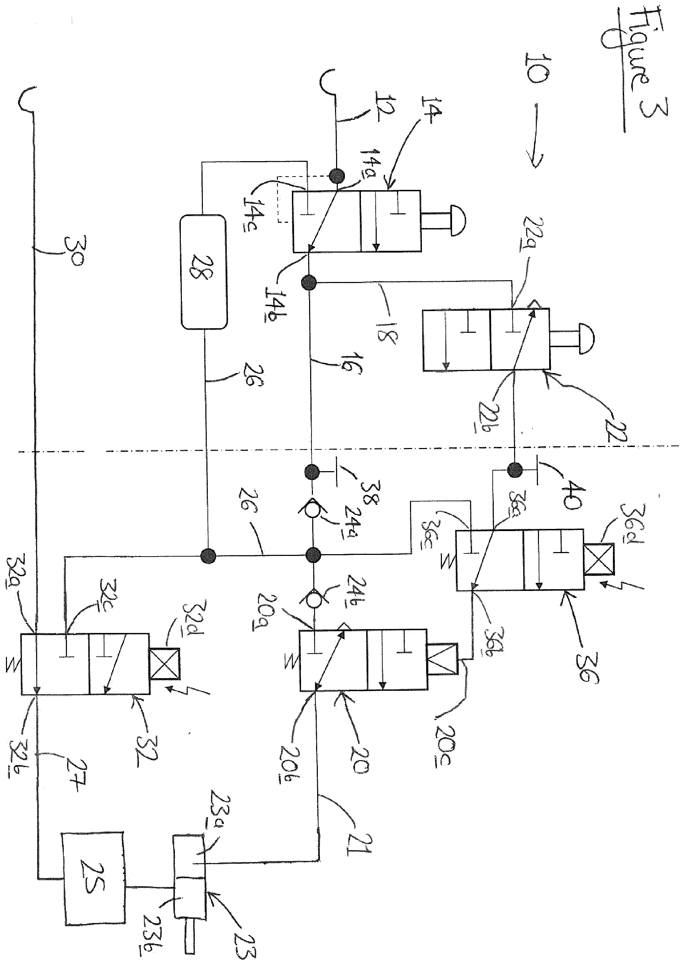

When operating in normal service braking mode, the spring brake can be applied by moving the park valve 22 from its first position to its second position, as illustrated in Figure 3. This causes fluid pressure at the control input 20c of the emergency apply valve 20 to be vented to atmosphere at the park valve 22, and the emergency apply valve 20 to move under the action of its biasing means to its second position in which its output 20b vents to atmosphere, and its input 20a is closed. Pressure is therefore released from the spring brake chamber 23a of the brake actuator 23 at the emergency apply valve 20 and the actuator 23 moves in response to the spring force to apply the brake.

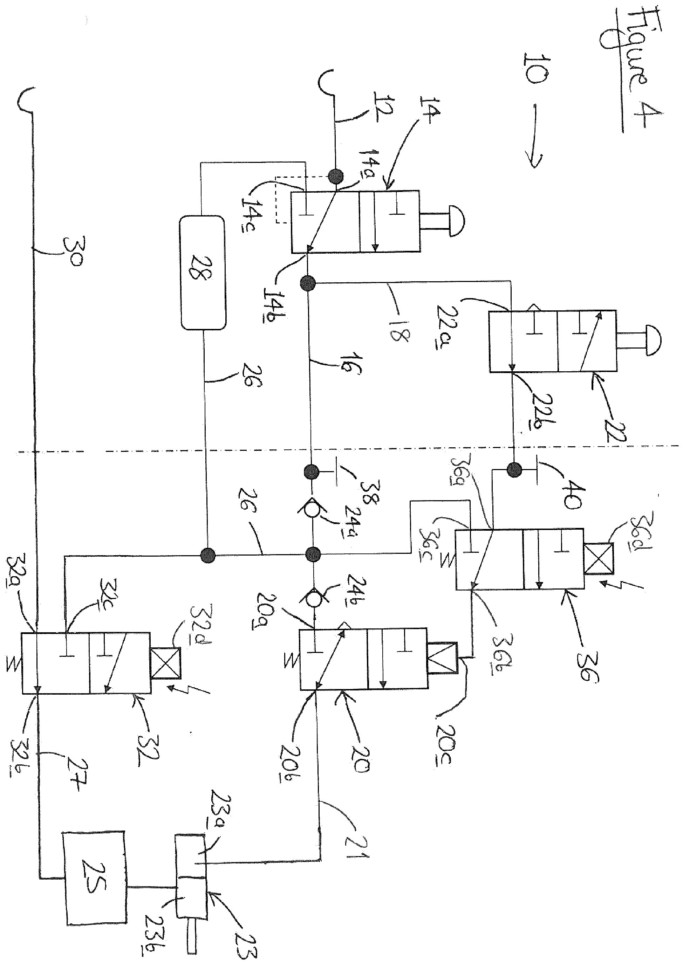

If the supply line 12 is disconnected from its supply of pressurised fluid, and there is no supply of electrical current to the brake apply valve 32, the braking system adopts the configuration shown in Figure 4. The release of pressure from the supply line 12 and the park line 18 causes the emergency apply valve 20 to move under the action of the biasing means to its second position in which the output is exhausted to atmosphere and the input 20a is closed. Fluid pressure is therefore released from the spring brake chamber 23a of the brake actuator 23 and vented to atmosphere at the emergency apply valve 20, and the actuator 23 moves in response to the spring force to apply the brake.

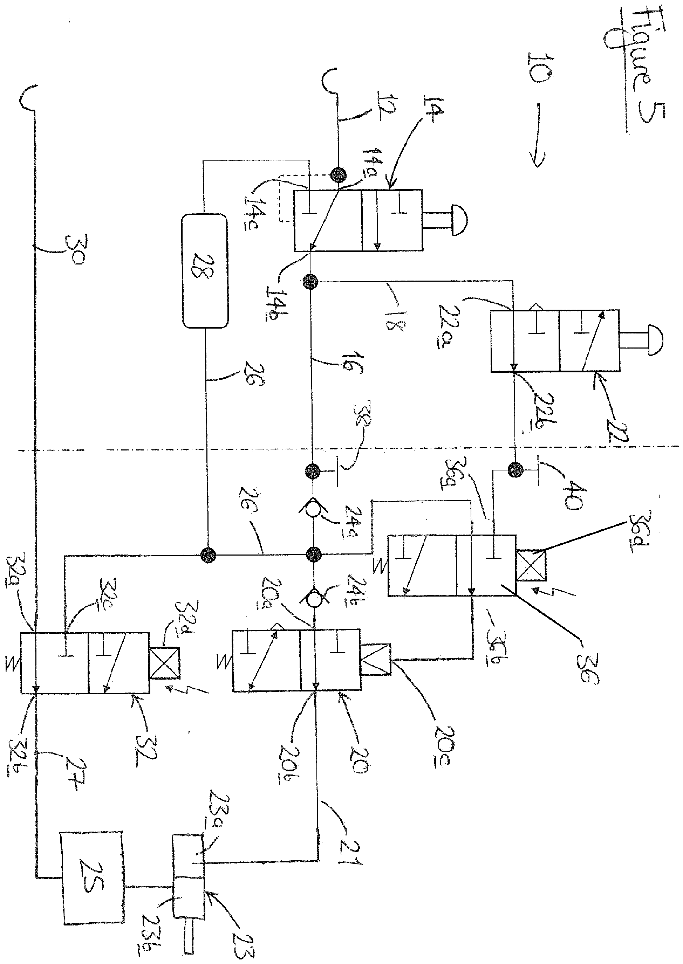

It may, not, however, be desirable to allow this emergency application of the vehicle spring brakes to take place, and if there is no problem with the electrical power supply to the system 10, the system can be operated to prevent this, specifically by the supply of electrical power to the solenoid 36d of the emergency braking override valve 36. This causes the emergency braking override valve 36 to move to its second position wherein the control input 20c of the emergency apply valve 20 is connected to the portion of the emergency apply line 16 between the two one-way check valves 24a, 24b, rather than to the portion of the supply line 16 upstream of the two one-way check valves 24a, 24b. Pressurised fluid thus flows from the reservoir 28 to the control input 20c of the emergency apply valve 20, maintained it in or returning it to its first position. Pressurised fluid can then also flow from the reservoir 28 to the spring brake chamber 23a via the emergency apply valve 20, to release the spring brake. This is illustrated in Figure 5.

Emergency braking can then, if desired, be effected using the service brake by the supply of electrical power to the solenoid 32d of the brake apply valve 32. Just as described above in relation to Figure 2, this causes the brake apply valve 32 to move to its second position in which the first input 32a is closed and the second input 32c is connected to the output 32b. In this case however, pressurised fluid passes from the reservoir 28 to the EBS control valve assembly 25 via the brake apply valve 32 and the service brake line 27 to effect service braking. As with conventional service braking, the EBS valve assembly can use conventional ABS control algorithms to modify the emergency braking in accordance with standard anti-lock control procedures if wheel slip is detected.

The braking system 10 may include a pressure sensor 38 in the emergency apply line 16 between the first one way valve 24a and the connection to the park line 18. If this pressure sensor 38 is connected to an electronic control unit (ECU not shown) which controls operation of the electrically operated valves in the braking system (including the brake apply valve 32 and the electrically operated valves in the EBS control valve assembly 25), the ECU can be programmed always to energise the emergency override valve 36 to override the emergency application of the spring brake whenever a sudden drop in the pressure in the emergency apply line 16 is detected, or whenever the pressure in the emergency apply line 16 falls below a predetermined level. The ECU may alternatively be programmed to energise the emergency braking override valve 36 to override the emergency application of the spring brake when a sudden drop in the pressure in the emergency apply line 16 is detected, or when the pressure in the emergency apply line 16 falls below a predetermined level, but only if certain other predetermined criteria are met - if the vehicle speed exceeds a predetermined level, or if the fluid pressure in the trailer reservoir 28 exceeds a predetermined level, for example.

Whilst the ECU may also be programmed always to activate the brake apply valve 32 when the emergency braking override valve 36 is activated (i.e. to effect emergency service braking when the emergency application of the spring brake is prevented) this need not be the case. The ECU may be programmed to activate a signal warning a driver of the vehicle that the supply of pressurised fluid to the supply line 12 has been broken via a CAN bus connection to the driver's cab. The signal may be visual - a warning light or the like, or audible - a buzzer, bell or the like, or preferably both. The driver may then make a decision to activate the brakes himself, in which case, an electrical braking demand signal is transmitted directly to the brake valve assembly 25 via a CAN bus to effect service braking.

The ECU may further be programmed such that, once the vehicle has come to a halt, it operates the EBS control valve assembly 25 to hold the pressure in the service brake chamber 23b of the brake actuator 23, whilst the emergency braking override valve 36 is deenergised. This causes the control input 20c of the emergency apply valve 20 to be vented to atmosphere, allowing the emergency apply valve 20 to move to its second position, and venting the spring brake line 21 and spring brake chamber 23a. Once the pressure in the spring brake chamber 23a is exhausted, the spring brake is applied, and the EBS control valve assembly 25 may be operated to exhaust the service brake chamber 23b.

Release of the spring brake occurring as a result of actuation of the park valve 22 as described in relation to Figure 3 above may also be overridden by actuation of the emergency braking override valve 36. In order to do this, a further pressure sensor 40 may be provided in the park line 18 between the control input 20c of the emergency apply valve 20 and the output 22b of the park valve 22. The further pressure sensor 40 may also be connected to the braking ECU which may be programmed to respond to a sudden reduction in pressure signal from the further pressure sensor 40 in the same way as described above in relation to the first pressure sensor 38.

It should be appreciated that, whilst in the embodiment of the invention described above two pressure transducers 38, 40 are provided, this need not be the case. The further pressure transducer 40 can be provided instead of the first pressure transducer 38, as the further pressure transducer 40 also detects the loss of pressure in the supply line 16. The provision of both pressure transducers 38, 40 allows the system to discriminate between loss of pressure to the control input 20c of the emergency apply valve 20 as a result of loss of supply pressure from the loss of pressure caused by operation of the park valve 22.

For completeness, it should be appreciated that the shunt valve 14 may be operated to release the parking brake without the need for electrical power, for example if the trailer is disconnected from a tractor but needs to be moved around a depot or the like. This can be done by moving the park valve 22 to its first position, and moving the shunt valve 14 to its second position.

Pressurised fluid flows from the trailer reservoir 28 to the control input 20c of the emergency apply valve 20 via the park line 18 and the park valve 22. The pressure at the control input 20c moves the emergency apply valve 20 to its first position and the trailer reservoir 28 is thus connected to the spring brake chamber 23a via the emergency apply line 16, the emergency apply valve 20 and the spring brake line 21. The resulting flow of pressurised fluid to the spring brake chamber 23a results in the release of the spring brake. The spring brake can be reapplied by returning the shunt valve 14 to its first position.

To avoid damage to the brake or brake actuator due to the simultaneous application of the spring brake and the service brake (compounding of the brakes), the EBS control valve assembly 25 may also include a further double check valve in a line connecting the second portion 21b of the spring brake line 21 to the delivery port of the modulator or one of the modulators in the EBS control valve assembly 25. This double check valve is configured such that no flow of fluid along this line is permitted unless, when the spring brake chamber 23a is exhausted (and so the spring brake applied), there is demand for service braking. Then, there is flow of pressurised fluid to the spring brake chamber 23a (to release the spring brake) in addition to flow to the service braking chamber 23b.

A second embodiment of the invention is illustrated in Figure 6. This is very similar to the embodiment of the invention discussed above and illustrated in Figures 1 to 5, and differs only in the elements described below. Specifically, the difference resides in the configuration of the emergency braking override valve 36' which, in the second embodiment of the invention has only a first port 36a', which is connected to the output port 22b of the park valve 22, and a second port 36b' which is connected to the control input 20c of the emergency apply valve 20.

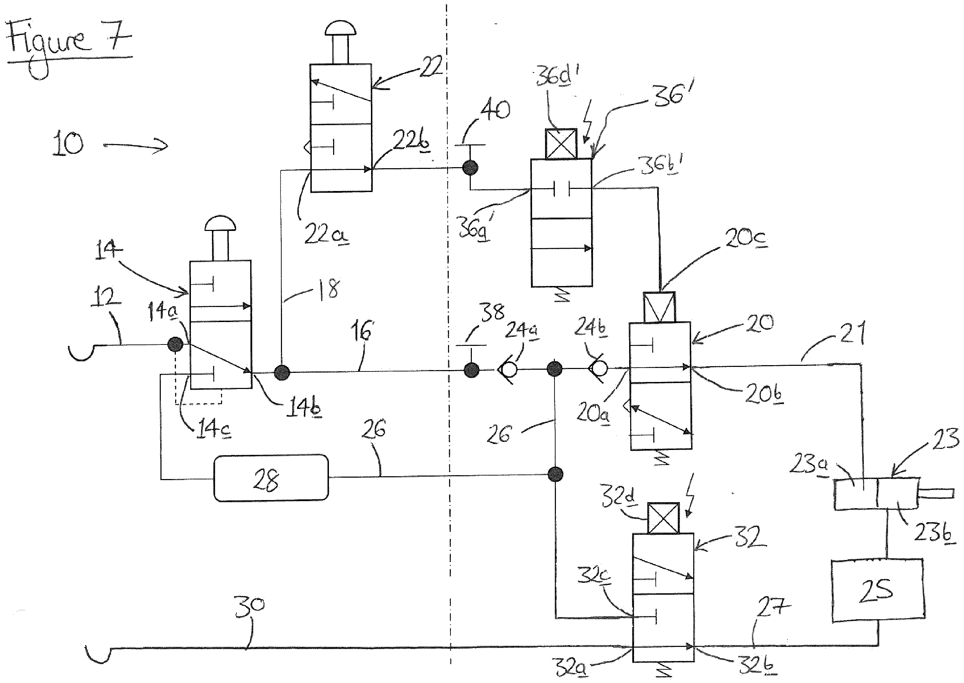

The emergency braking override valve 36' is movable between a first position (illustrated in Figure 6) in which its first port 36a' is connected to its second port 36b', and a second position in (illustrated in Figure 7) in which flow of fluid between its second port 36b' and its first port 36a' is substantially prevented. Again, the passage of fluid from the supply line 16 to the control input 20c of the emergency apply valve 20 via the park valve 22 is therefore not affected by the emergency braking override valve 36' when the emergency braking override valve 36' is in its first position. This embodiment of emergency braking override valve 36' is also electrically operable, in this example, by means of a solenoid 36d', and mechanical biasing means (in this example a spring) is provided to urge the emergency braking override valve 36' into its first position. Movement of the emergency braking override valve 36' from the first position to the second position is achieved by the supply of an electrical current to the solenoid 36d.

The braking system according to the second embodiment of the invention operates in exactly the same way as the first embodiment of braking system described above in all respects other than when suppression of the emergency application of the spring brake due to loss of pressure in the supply line 12 is required as described below. The second embodiment of braking system is shown in normal service braking mode in Figure 6.

Again, if it is deemed desirable to allow emergency application of the vehicle spring brakes to take place, and if there is no problem with the electrical power supply to the system 10, the system 10 can be operated to prevent this by the supply of electrical power to the solenoid 36d' of the emergency braking override valve 36'. This causes the emergency braking override valve 36' to move to its second position wherein the control input 20c of the emergency apply valve 20 is isolated from the remainder of the system, as illustrated in Figure 7.

Provided this is done before the pressure at the control input 20c of the emergency apply valve 20 drops too low to overcome the biasing force of the biasing means, movement of the emergency apply valve 20 to its second position, and the resulting venting of the spring brake chamber 23a is prevented. As with the first embodiment of the invention, emergency braking can then, if desired, be effected using the service brake by the supply of electrical power to the solenoid 32d of the brake apply valve 32. Just as described above in relation to Figure 2, this causes the brake apply valve 32 to move to its second position in which the first input 32a is closed and the second input 32c is connected to the output 32b. In this case however, pressurised fluid passes from the reservoir 28 to the EBS control valve assembly 25 via the brake apply valve 32 and the service brake line 27 to effect service braking. As with conventional service braking, the EBS valve assembly can use conventional ABS control algorithms to modify the emergency braking in accordance with standard anti-lock control procedures if wheel slip is detected.

The ECU is preferably programmed to activate the emergency braking override valve 36' to override the emergency application of the spring brake whenever a sudden drop in the pressure is detected by pressure sensor 40 at the output port 22b of the park valve 22, or when the pressure detected by this pressure sensor 40 falls below a predetermined level. The ECU may, however, be programmed to energise the emergency braking override valve 36' to override the emergency application of the spring brake when a sudden drop in the pressure at sensor 40 is detected, or when this pressure falls below a predetermined level, but only if certain other predetermined criteria are met - if the vehicle speed exceeds a predetermined level, or if the fluid pressure in the trailer reservoir 28 exceeds a predetermined level, for example.

The pressurised fluid used in the invention is preferably compressed air, but any other fluid may be used instead, and the invention could equally be employed in a hydraulic braking system.

When used in this specification and claims, the term "line" covers any type of conduit for pressurised fluid including a passage or bore through a housing, a hose, pipe or tube. It should also be appreciated that, whilst in this example, only one brake actuator 23 is shown, the spring brake line 21 and the EBS valve assembly 25 may be connected to more than one brake actuator. The system 10 may also be provided with more than one EBS valve assembly 25. For example, one EBS valve assembly 25 may be connected to one or more actuators on one side of the trailer, which a second EBS valve assembly is connected to one or more actuators on the other side of the trailer, with both EBS valve assemblies being connected to the service brake line 27.

When used in this specification and claims, the terms "comprises" and "comprising" and variations thereof mean that the specified features, steps or integers are included. The terms are not to be interpreted to exclude the presence of other features, steps or components.

## Claims

1. A vehicle braking system (10) comprising a brake actuator (23) which is operable to adopt a brake apply position in which the brake actuator (23) may apply a braking force to a vehicle wheel and a brake release position in which the brake actuator (23) may release any braking force applied to a vehicle wheel, the brake actuator (23) having a spring brake chamber (23a) and a spring and being configured such that supply of pressurised fluid to the spring brake chamber (23a) causes the brake actuator (23) to move against the biasing force of the spring to the brake release position and release of pressurised fluid from the spring brake chamber (23a) causes the brake actuator (23) to move under the action of the spring to the brake apply position, the system further including a supply line (12) whereby the spring brake chamber (23a) is, in use, connected to a supply of pressurised fluid, and an emergency brake apply valve (20) which has a control port (20c) which is connected to the supply line (12), the emergency brake apply valve (20) being configured automatically to connect the spring brake chamber (23a) to a low pressure region when the pressure at the control port (20c) falls below a predetermined level, **characterised in that** the system further includes an electrically operable emergency braking override valve (36, 36') which has a first port (36a, 36a') which is connected to the supply line (12) and a second port (36b, 36b') which is connected to the control port (20c) of the emergency brake apply valve (20) and which, when supplied with sufficient electrical power, acts to prevent loss of fluid pressure at the control port (20c) of the emergency brake apply valve (20).

2. A vehicle braking system (10) according to claim 1 wherein the emergency brake apply valve (20) has an input port (20a) which is connected to the supply line (12) and an output port (20b) which is connected to the spring brake chamber (23a), and is movable between a first position in which the input port (20a) is connected to the output port (20b) and a second position in which the input port (20a) is closed and the output port (20b) vents to a low pressure region.

3. A vehicle braking system (10) according to claim 2 wherein mechanical biasing means is provided to urge the emergency brake apply valve (20) into the second position, and movement of the emergency brake apply valve from the second position to the first position is achieved by the supply of pressurised fluid to the control input (20c) at sufficient pressure to overcome the force of the biasing means.

4. A vehicle braking system (10) according to any preceding claim wherein the brake actuator (23) further includes a service brake chamber (23b), wherein supply of pressurised fluid to the service brake chamber (23b) causes the brake actuator (23) to move to the brake apply position, and a control line (30) which in use connects a source of a fluid pressure braking demand signal to the service brake chamber (23b) via a braking control valve assembly (25, 32).

5. A vehicle braking system according to claim 4 wherein the brake valve assembly (25, 32) comprises at least one modulator (25) which has a control port which is connected to the control line (30) for receipt of a fluid pressure braking demand signal, a supply port which is connected to a source of pressurised fluid, a delivery port which is connected to the service brake chamber, and an exhaust port which vents to a low pressure region, the modulator (25) being operable to move between a build configuration in which the supply port is connected to the delivery port whilst the exhaust port is closed, a hold configuration in which the exhaust port and the supply ports are closed and an exhaust configuration in which the delivery port is connected to the exhaust port whilst the supply port is closed.

6. A vehicle braking system (10) according to claim 4 or 5 wherein the vehicle braking system (10) further comprises a pressurised fluid reservoir (28) which is connected to the control line (30) via a brake apply valve (32).

7. A vehicle braking system (10) according to claim 6 wherein the brake apply valve (32) is movable between a first configuration in which the brake apply valve (32) substantially prevents flow of fluid from the pressurised fluid reservoir (28) to the control line (30), and a second in which the brake apply valve (32) allows flow of fluid from the pressurised fluid reservoir (28) to the control line (30).

8. A vehicle braking system (10) according to claim 4 wherein a non-return valve (24a) is provided in the supply line upstream of the input port (20a) of the emergency brake apply valve (20), the non-return valve (24a) permitting flow of fluid along the supply line (12) to the emergency brake apply valve (20) whilst substantially preventing flow of fluid in the opposite direction.

9. A vehicle braking system (10) according to claims 6 and 8 wherein the pressurised fluid reservoir (28) is connected to the supply line (12) downstream of the non-return valve (24a).

10. A vehicle braking system according (10) to claims 8 and 9 wherein a second non-return valve (24b) is provided in the supply line (12) upstream of the input port (20a) of the emergency brake apply valve (20), the second non-return valve (24b) also permitting flow of fluid along the supply line (12) to the emergency brake apply valve (20) whilst substantially preventing flow of fluid in the opposite direction, and the pressurised fluid reservoir (28) is connected to the supply line (12) between the two non-return valves (24a, 24b).

11. A vehicle braking system (10) according to claim 8 and one of claims 2 to 7, 9 and 10 wherein the emergency braking override valve (36) has a third port (36c) which is connected to the supply line (12) between the first port (20a) of the emergency brake apply valve (20) and the connection to the control port (20c) of the emergency brake apply valve (20), and the third port (36c) is connected to the supply line downstream of the non-return valve (24a).

12. A vehicle braking system (10) according to claims 10 and 11 wherein the third port (36c) is connected to the supply line (12) between the two non-return valves (24a, 24b).

13. A vehicle braking system (10) according to claims 11 or 12 wherein the emergency braking override valve (36) is movable between a first position in which its first port (36a) is connected to its second port (36b), whilst its third port (36c) is closed, and a second position in which its third port (36c) is connected to its second port (36b) whilst its first port (36a) is closed.

14. A vehicle braking system (10) according to claim 13 wherein the emergency braking override valve (36) is provided with mechanical biasing means to urge the emergency braking override valve (36) into the first position, movement of the emergency braking override valve from the first position to the second position being achieved by the supply of electrical power to the emergency braking override valve (36).

15. A vehicle braking system (10) according to any one of claims 1 to 10 wherein the emergency braking override valve (36') is movable between a first position in which its first port (36a) is connected to its second port (36b), and a second position in which flow of fluid between its second port (36b) and its first port (36a) is substantially prevented, and is provided with mechanical biasing means to urge the emergency braking override valve (36) into its first position, movement of the emergency braking override valve (36) from the first position to the second position being achieved by the supply of an electrical current to the emergency braking override valve (36).

## Patentansprüche

1. Fahrzeugbremssystem (10), umfassend einen Bremsaktor (23), der betätigbar ist, um eine Bremsbetätigungsposition, in der der Bremsaktor (23) eine Bremskraft auf ein Fahrzeugrad ausüben kann, und eine Bremsfreigabeposition, in der der Bremsaktor (23) jegliche auf ein Fahrzeugrad ausgeübte Bremskraft freigeben kann, einzunehmen, wobei der Bremsaktor (23) eine Federspeicherbremskammer (23a) und eine Feder aufweist und konfiguriert ist, so dass die Druckfluidversorgung der Federspeicherbremskammer (23a) bewirkt, dass sich der Bremsaktor (23) gegen die Vorspannkraft der Feder in die Bremsfreigabeposition bewegt, und Freigabe von Druckfluid aus der Federspeicherbremskammer (23a) bewirkt, dass sich der Bremsaktor (23) unter der Einwirkung der Feder in die Bremsbetätigungsposition bewegt, wobei das System ferner eine Versorgungsleitung (12), wodurch die Federspeicherbremskammer (23a), im Einsatz, mit einer Druckfluidversorgung verbunden ist, und ein Notbremsbetätigungsventil (20), das eine Steueröffnung (20c) aufweist, die mit der Versorgungsleitung (12) verbunden ist, wobei das Notbremsbetätigungsventil (20) dafür konfiguriert ist, die Federspeicherbremskammer (23a) automatisch mit einem Niederdruckbereich zu verbinden, wenn der Druck an der Steueröffnung (20c) unter ein vorbestimmtes Niveau fällt, beinhaltet, **dadurch gekennzeichnet, dass** das System ferner ein elektrisch betätigbares Notbremsübersteuerungsventil (36, 36') beinhaltet, das eine erste Öffnung (36a, 36a'), die mit der Versorgungsleitung (12) verbunden ist, und eine zweite Öffnung (36b, 36b'), die mit der Steueröffnung (20c) des Notbremsbetätigungsventils (20) verbunden ist, aufweist und das, bei Versorgung mit genügend elektrischem Strom, wirkt, um Fluiddruckverlust an der Steueröffnung (20c) des Notbremsbetätigungsventils (20) zu verhindern.

2. Fahrzeugbremssystem (10) nach Anspruch 1, worin das Notbremsbetätigungsventil (20) eine Eingangsöffnung (20a), die mit der Versorgungsleitung (12) verbunden ist, und eine Ausgangsöffnung (20b), die mit der Federspeicherbremskammer (23a) verbunden ist, aufweist und zwischen einer ersten Position, in der die Eingangsöffnung (20a) mit der Ausgangsöffnung (20b) verbunden ist, und einer zweiten Position, in der die Eingangsöffnung (20a) geschlossen ist und die Ausgangsöffnung (20b) in einen Niederdruckbereich abführt, bewegbar ist.

3. Fahrzeugbremssystem (10) nach Anspruch 2, worin ein mechanisches Vorspannmittel vorgesehen ist, um das Notbremsbetätigungsventil (20) in die zweite Position zu drücken, und Bewegung des Notbremsbetätigungsventils von der zweiten Position in die erste Position durch die Zufuhr von Druckfluid zum Steuereingang (20c) mit genügend Druck zum Überwinden der Kraft des Vorspannmittels erreicht wird.

4. Fahrzeugbremssystem (10) nach einem vorhergehenden Anspruch, worin der Bremsaktor (23) ferner eine Betriebsbremskammer (23b), worin Zufuhr von Druckfluid zur Betriebsbremskammer (23b) bewirkt, dass sich der Bremsaktor (23) in die Bremsbetätigungsposition bewegt, und eine Steuerleitung (30), die im Einsatz eine Quelle eines Fluiddruck-Bremsanforderungssignals mit der Betriebsbremskammer (23b) über eine Bremsregelventilanordnung (25, 32) verbindet, beinhaltet.

5. Fahrzeugbremssystem nach Anspruch 4, worin die Bremsventilanordnung (25, 32) mindestens einen Modulator (25) umfasst, der eine Steueröffnung, die mit der Steuerleitung (30) für den Empfang eines Fluiddruck-Bremsanforderungssignals verbunden ist, eine Versorgungsöffnung, die mit einer Druckfluidquelle verbunden ist, eine Abgabeöffnung, die mit der Betriebsbremskammer verbunden ist, und eine Austrittsöffnung, die in einen Niederdruckbereich abführt, aufweist, wobei der Modulator (25) betätigbar ist, um sich zwischen einer Baukonfiguration, in der die Versorgungsöffnung mit der Abgabeöffnung verbunden ist, während die Austrittsöffnung geschlossen ist, einer Haltekonfiguration, in der die Austrittsöffnung und die Versorgungsöffnungen geschlossen sind, und einer Austrittskonfiguration, in der die Abgabeöffnung mit der Austrittsöffnung verbunden ist, während die Versorgungsöffnung geschlossen ist, zu bewegen.

6. Fahrzeugbremssystem (10) nach Anspruch 4 oder 5, worin das Fahrzeugbremssystem (10) ferner einen Druckfluidbehälter (28) umfasst, der mit der Steuerleitung (30) über ein Bremsbetätigungsventil (32) verbunden ist.

7. Fahrzeugbremssystem (10) nach Anspruch 6, worin das Bremsbetätigungsventil (32) zwischen einer ersten Konfiguration, in der das Bremsbetätigungsventil (32) einen Fluidfluss vom Druckfluidbehälter (28) zur Steuerleitung (30) im Wesentlichen verhindert, und einer zweiten, in der das Bremsbetätigungsventil (32) einen Fluidfluss vom Druckfluidbehälter (28) zur Steuerleitung (30) gestattet, bewegbar ist.

8. Fahrzeugbremssystem (10) nach Anspruch 4, worin ein Rückschlagventil (24a) in der Versorgungsleitung vor der Eingangsöffnung (20a) des Notbremsbetätigungsventils (20) vorgesehen ist, wobei das Rückschlagventil (24a) einen Fluidfluss entlang der Versorgungsleitung (12) zum Notbremsbetätigungsventil (20) gestattet, während ein Fluidfluss in der Gegenrichtung im Wesentlichen verhindert wird.

9. Fahrzeugbremssystem (10) nach Anspruch 6 und 8, worin der Druckfluidbehälter (28) mit der Versorgungsleitung (12) nach dem Rückschlagventil (24a) verbunden ist.

10. Fahrzeugbremssystem (10) nach Anspruch 8 und 9, worin ein zweites Rückschlagventil (24b) in der Versorgungsleitung (12) vor der Eingangsöffnung (20a) des Notbremsbetätigungsventils (20) vorgesehen ist, wobei das zweite Rückschlagventil (24b) ebenfalls einen Fluidfluss entlang der Versorgungsleitung (12) zum Notbremsbetätigungsventil (20) gestattet, während ein Fluidfluss in der Gegenrichtung im Wesentlichen verhindert wird, und der Druckfluidbehälter (28) mit der Versorgungsleitung (12) zwischen den beiden Rückschlagventilen (24a, 24b) verbunden ist.

11. Fahrzeugbremssystem (10) nach Anspruch 8 und einem der Ansprüche 2 bis 7, 9 und 10, worin das Notbremsübersteuerungsventil (36) eine dritte Öffnung (36c) aufweist, die mit der Versorgungsleitung (12) zwischen der ersten Öffnung (20a) des Notbremsbetätigungsventils (20) und dem Anschluss an die Steueröffnung (20c) des Notbremsbetätigungsventils (20) verbunden ist, und die dritte Öffnung (36c) mit der Versorgungsleitung nach dem Rückschlagventil (24a) verbunden ist.

12. Fahrzeugbremssystem (10) nach Anspruch 10 und 11, worin die dritte Öffnung (36c) mit der Versorgungsleitung (12) zwischen den beiden Rückschlagventilen (24a, 24b) verbunden ist.

13. Fahrzeugbremssystem (10) nach Anspruch 11 oder 12, worin das Notbremsübersteuerungsventil (36) zwischen einer ersten Position, in der seine erste Öffnung (36a) mit seiner zweiten Öffnung (36b) verbunden ist, während seine dritte Öffnung (36c) geschlossen ist, und einer zweiten Position, in der seine dritte Öffnung (36c) mit seiner zweiten Öffnung (36b) verbunden ist, während seine erste Öffnung (36a) geschlossen ist, bewegbar ist.

14. Fahrzeugbremssystem (10) nach Anspruch 13, worin das Notbremsübersteuerungsventil (36) mit einem mechanischem Vorspannmittel versehen ist, um das Notbremsübersteuerungsventil (36) in die erste Position zu drücken, wobei Bewegung des Notbremsübersteuerungsventils von der ersten Position in die zweite Position durch Versorgung des Notbremsübersteuerungsventils (36) mit elektrischem Strom erreicht wird.

15. Fahrzeugbremssystem (10) nach einem der Ansprüche 1 bis 10, worin das Notbremsübersteuerungsventil (36') zwischen einer ersten Position, in der seine erste Öffnung (36a) mit seiner zweiten Öffnung (36b) verbunden ist, und einer zweiten Position, in der ein Fluidfluss zwischen seiner zweiten Öffnung (36b) und seiner ersten Öffnung (36a) im Wesentlichen verhindert wird, bewegbar ist, und mit einem mechanischen Vorspannmittel versehen ist, um das Notbremsübersteuerungsventil (36) in seine erste Position zu drücken, wobei Bewegung des Notbremsübersteuerungsventils (36) von der ersten Position in die zweite Position durch Versorgung des Notbremsübersteuerungsventils (36) mit elektrischem Strom erreicht wird.

## Revendications

1. Système de freinage de véhicule (10), comprenant un actionneur de frein (23) utilisable pour adopter une position de serrage de frein dans laquelle l'actionneur de frein (23) peut appliquer une force de freinage à une roue de véhicule, et une position de desserrage de frein dans laquelle l'actionneur de frein (23) peut relâcher une force de freinage appliquée à une roue de véhicule, l'actionneur de frein (23) ayant une chambre de frein à ressort (23a) et un ressort et étant configuré de sorte que l'alimentation de la chambre de frein à ressort (23a) en fluide sous pression amène l'actionneur de frein (23) à se déplacer contre la force de sollicitation du ressort vers la position de desserrage de frein et la libération du fluide sous pression de la chambre de frein à ressort (23a) amenant l'actionneur de frein (23) à se déplacer sous l'action du ressort vers la position de serrage de frein, le système comprenant en outre une conduite d'alimentation (12) par l'intermédiaire de laquelle la chambre de frein à ressort (23a) est, lors de l'utilisation, reliée à une alimentation en fluide sous pression, et une soupape de serrage de frein d'urgence (20) qui comporte un orifice de commande (20c) qui est relié à la conduite d'alimentation (12), la soupape de serrage de frein d'urgence (20) étant configurée automatiquement pour relier la chambre de frein à ressort (23a) à une région à basse pression quand la pression au niveau de l'orifice de commande (20c) tombe au-dessous d'un niveau prédéterminé,
le système étant **caractérisé en ce qu'**il comprend en outre une soupape de remplacement de freinage d'urgence à actionnement électrique (36, 36') qui comporte un premier orifice (36a, 36a') qui est relié à la conduite d'alimentation (12) et un deuxième orifice (36b, 36b') qui est relié à l'orifice de commande (20c) de la soupape de serrage de frein d'urgence (20) et qui, lorsqu'il est alimenté en énergie électrique suffisante, agit pour empêcher une perte de pression de fluide au niveau de l'orifice de commande (20c) de la soupape de serrage de frein d'urgence (20).

2. Système de freinage de véhicule (10) selon la revendication 1, dans lequel la soupape de serrage de frein d'urgence (20) comporte un orifice d'entrée (20a) qui est relié à la conduite d'alimentation (12) et un orifice de sortie (20b) qui est relié à la chambre de frein à ressort (23a), et est mobile entre une première position dans laquelle l'orifice d'entrée (20a) est relié à l'orifice de sortie (20b) et une seconde position dans laquelle l'orifice d'entrée (20a) est fermé et l'orifice de sortie (20b) évacue vers une région à basse pression.

3. Système de freinage de véhicule (10) selon la revendication 2, dans lequel un moyen de sollicitation mécanique est fourni pour forcer la soupape de serrage de frein d'urgence (20) dans la seconde position, et un déplacement de la soupape de serrage de frein d'urgence de la seconde position à la première position est obtenu par l'alimentation de l'entrée de commande (20c) en fluide sous pression à une pression suffisante pour contrer la force du moyen de sollicitation.

4. Système de freinage de véhicule (10) selon l'une quelconque des revendications précédentes, dans lequel l'actionneur de frein (23) comprend en outre une chambre de frein de service (23b), l'alimentation de la chambre de frein de service (23b) en fluide sous pression amenant l'actionneur de frein (23) à se déplacer dans la position de serrage de frein, et une conduite de commande (30) qui, lors de l'utilisation, relie une source d'un signal de demande de freinage par pression de fluide à la chambre de frein de service (23b) par l'intermédiaire d'un ensemble soupape de commande de freinage (25, 32).

5. Système de freinage de véhicule selon la revendication 4, dans lequel l'ensemble soupape de frein (25, 32) comprend au moins un modulateur (25) qui comporte un orifice de commande qui est relié à la conduite de commande (30) pour recevoir un signal de demande de freinage par pression de fluide, un orifice d'alimentation qui est relié à une source de fluide sous pression, un orifice de refoulement qui est relié à la chambre de frein de service, et un orifice d'échappement qui évacue vers une région à basse pression, le modulateur (25) pouvant se déplacer entre une configuration d'accumulation dans laquelle l'orifice d'alimentation est relié à l'orifice de refoulement pendant que l'orifice d'échappement est fermé, une configuration de maintien dans laquelle l'orifice d'échappement et l'orifice d'alimentation sont fermés, et une configuration d'échappement dans laquelle l'orifice de refoulement est relié à l'orifice d'échappement pendant que l'orifice d'alimentation est fermé.

6. Système de freinage de véhicule (10) selon la revendication 4 ou 5, le système de freinage de véhicule (10) comprenant en outre un réservoir de fluide sous pression (28) relié à la conduite de commande (30) par l'intermédiaire d'une soupape de serrage de frein (32).

7. Système de freinage de véhicule (10) selon la revendication 6, dans lequel la soupape de serrage de frein (32) est mobile entre une première configuration dans laquelle la soupape de serrage de frein (32) empêche sensiblement un écoulement de fluide du réservoir de fluide sous pression (28) à la conduite de commande (30), et une seconde configuration dans laquelle la soupape de serrage de frein (32) permet un écoulement de fluide du réservoir de fluide sous pression (28) à la conduite de commande (30).

8. Système de freinage de véhicule (10) selon la revendication 4, dans lequel un clapet de non-retour (24a) est situé dans la conduite d'alimentation en amont de l'orifice d'entrée (20a) de la soupape de serrage de frein d'urgence (20), le clapet de non-retour (24a) permettant un écoulement de fluide le long de la conduite d'alimentation (12) vers la soupape de serrage de frein d'urgence (20) tout en empêchant sensiblement un écoulement de fluide dans la direction opposée.

9. Système de freinage de véhicule (10) selon les revendications 6 et 8, dans lequel le réservoir de fluide sous pression (28) est relié à la conduite d'alimentation (12) en aval du clapet de non-retour (24a).

10. Système de freinage de véhicule (10) selon les revendications 8 et 9, dans lequel un second clapet de non-retour (24b) est situé dans la conduite d'alimentation (12) en amont de l'orifice d'entrée (20a) de la soupape de serrage de frein d'urgence (20), le second clapet de non-retour (24b) permettant également un écoulement de fluide le long de la conduite d'alimentation (12) vers la soupape de serrage de frein d'urgence (20) tout en empêchant sensiblement un écoulement de fluide dans la direction opposée, et le réservoir de fluide sous pression (28) étant relié à la conduite d'alimentation (12) entre les deux clapets de non-retour (24a, 24b).

11. Système de freinage de véhicule (10) selon la revendication 8 et une des revendications 2 à 7, 9 et 10, dans lequel la soupape de remplacement de freinage d'urgence (36) comporte un troisième orifice (38c) qui est relié à la conduite d'alimentation (12) entre le premier orifice (20a) de la soupape de serrage de frein d'urgence (20) et le raccordement à l'orifice de commande (20c) de la soupape de serrage de frein d'urgence (20), et le troisième orifice (36c) est relié à la conduite d'alimentation en aval du clapet de non-retour (24a).

12. Système de freinage de véhicule (10) selon les revendications 10 et 11, dans lequel le troisième orifice (36c) est relié à la conduite d'alimentation (12) entre les deux clapets de non-retour (24a, 24b).

13. Système de freinage de véhicule (10) selon la revendication 11 ou 12, dans lequel la soupape de remplacement de freinage d'urgence (36) est mobile entre une première position dans laquelle son premier orifice (36a) est relié à son deuxième orifice (36b) pendant que son troisième orifice (36c) est fermé, et une seconde position dans laquelle son troisième orifice (36c) est relié à son deuxième orifice (36b) pendant que son premier orifice (36a) est fermé.

14. Système de freinage de véhicule (10) selon la revendication 13, dans lequel la soupape de remplacement de freinage d'urgence (36) est munie d'un moyen de sollicitation mécanique pour forcer la soupape de remplacement de freinage d'urgence (36) dans la première position, le déplacement de la soupape de remplacement de freinage d'urgence de la première position à la seconde position étant obtenu en alimentant la soupape de remplacement de freinage d'urgence (36) en énergie électrique.

15. Système de freinage de véhicule (10) selon l'une quelconque des revendications 1 à 10, dans lequel la soupape de remplacement de freinage d'urgence (36') est mobile entre une première position dans laquelle son premier orifice (36a) est relié à son deuxième orifice (36b), et une seconde position dans laquelle un écoulement de fluide entre son deuxième orifice (36b) et son premier orifice (36a) est sensiblement empêché, et est munie d'un moyen de sollicitation mécanique pour forcer la soupape de remplacement de freinage d'urgence (36) dans sa première position, le déplacement de la soupape de remplacement de freinage d'urgence (36) de la première position à la seconde position étant obtenu en alimentant la soupape de remplacement de freinage d'urgence (36) en courant électrique.
